# EUROPÄISCHE PATENTANMELDUNG

(11) **EP 1 201 497 A2**
(43) Veröffentlichungstag der Anmeldung: **02.05.2002**
(21) Anmeldenummer: 01124368.0
(22) Anmeldetag: 24.10.2001
(51) Int. Cl.: B60Q 1/00

(54) **Beleuchtungsanordnung für Kraftfahrzeuge**

(30) Priorität: 24.10.2000 DE 10052653
(71) Anmelder: Volkswagen Aktiengesellschaft, 38436 Wolfsburg (DE)
(72) Erfinder: Werner, Michael, 38106 Braunschweig (DE); Ortmann, Frank, 38527 Meine (DE)

(57) **Zusammenfassung**

Die Erfindung betrifft eine Beleuchtungsanordnung für Kraftfahrzeuge mit mindestens zwei Leuchten, sowie Reflektoren, sowie einem Gehäuse oder Trägerteil in oder auf welchem die Leuchten angeordnet sind, gemäß Oberbegriff des Patentanspruches 1. Um hierbei zu erreichen, daß eine weitere Minimalisierung des benötigten Bauraumes auch bei einer Mehrzahl von Scheinwerferanordnungen pro Leuchtengehäuse gegeben ist, ist erfindungsgemäß vorgeschlagen, daß das Träger- oder Gehäuseteil (10) der ersten Leuchte (1) derart konturiert ist, daß es auf mindestens einem Flächensegment integral den Reflektorgrundkörper (4) einer mindestens weiteren Leuchte (2) oder den Reflektor (3) und (4) aller Leuchten bildet.

## Beschreibung

Die Erfindung betrifft eine Beleuchtungsanordnung für Kraftfahrzeuge mit mindestens zwei Leuchten, sowie Reflektoren, sowie einem Gehäuse oder Trägerteil in oder auf welchem die Leuchten angeordnet sind, gemäß Oberbegriff des Patentanspruches 1.

Beleuchtungsanordnungen für Kraftfahrzeuge sind vielfach bekannt. Dabei werden im wesentlichen nach vorne in Fahrtrichtung gerichtete Scheinwerferanordnungen verwendet, und in rückwärtiger Richtung sind Heckleuchten angeordnet. Die frontal angeordneten Leuchten oder Lampen oder besser gesagt, Scheinwerfer, dienen zur Ausleuchtung der Fahrbahn bei Dunkelheit, zum anderen dienen sie jedoch auch als Signalleuchten für den Gegenverkehr.

Mittlerweile werden in Kraftfahrzeugen Leuchten eingesetzt, bei denen sowohl im Heckleuchtenbereich, als auch im Scheinwerferbereich mehrere Leuchten oder Scheinwerfer angeordnet bzw. integriert sind. Diese besagte Mehrfachanordnung von Leuchten oder Scheinwerfern in einem gemeinsamen Leuchtengehäuse ergeben große Vorteile hinsichtlich der Montage. Dennoch ergibt sich durch die baulichen und konstruktiven Gegebenheiten eines Kraftfahrzeuges nur ein begrenzt zur Verfügung stehender Einbauraum für die besagten Leuchtengehäuse. Insofern ist darauf zu achten, daß eine Mehrzahl verschiedener Leuchten und Beleuchtungsfunktionen derart in ein gemeinsames Leuchtengehäuse integriert sind, daß sich eine Vielzahl von Beleuchtungsfunktionen bei minimal benötigtem Bauraum ergibt.

Ein Beleuchtungssystem mit einem ersten sowie einem zweiten Reflektor ist aus der WO 99/42758 bekannt. Der zweite Reflektor ist jedoch um die Linse eines nach dem Projektionsscheinwerfertyps aufgebauten Scheinwerfers angeordnet und soll Streulicht sammeln.

Insgesamt werden Scheinwerfer im wesentlichen nach zwei Bautypen unterteilt. Zum einen gibt es reine Reflektionsscheinwerfer, die lediglich einen Reflektor, zumeist einen parabolischen Reflektor aufweisen, in dessen einem Fokus möglichst gut zentriert der eigentliche Beleuchtungskörper, d. h. die Lampe, plaziert ist. Auf diese Weise wird im Reflektionsprinzip der größte Teil des von der Leuchte emittierten Lichtes vom Reflektor gesammelt und nach vorne gerichtet.

Ein zweiter, mittlerweile häufig vertretener Scheinwerfertyp ist der nach dem Projektionsprinzip. Hierbei wird nicht nur eine Leuchte mit Reflektor, sondern auch eine davor angeordnete Projektionslinse verwendet, die auf gewisse Weise das Lichtstrahlenbündel noch weiter bündeln kann, so daß im Prinzip kaum noch Streulicht entsteht.

Aus der DE 198 29 344 A1 ist eine Scheinwerferanordnung bekannt, bei der die Lichtaustrittsfläche ganz oder teilweise halbdurchlässig abgedeckt ist. Hierdurch wird das entstehende Streulicht zumindest noch zur reinen Signallichtgebung verwendet, wenngleich auch nicht mehr als scheinwerfermäßige Ausleuchtung der Fahrbahn.

Des weiteren sind zum Einfangen von Streulicht auch Anordnungen bekannt, bei denen Lichtleiterringe um den Reflektorrand angeordnet sind, wie dies beispielsweise aus der DE 197 39 173 A1 bekannt ist.

Aus der DE 198 55 686 A1 ist es bekannt, zwei nebeneinander angeordnete Reflektoren, die in einem gemeinsamen Trägermodul eingesetzt werden, anschließend in einem gemeinsamen Leuchtengehäuse anzuordnen. Die beiden Reflektoren sind dabei dichtest möglich nebeneinander angeordnet, sind jedoch separat voneinander und lediglich über das gemeinsame Trägermodul miteinander verbunden. Eine Anordnung dieser Art eignet sich für einen bis dahin bekannten kompakten Einbau in einem gemeinsamen Leuchtengehäuse.

Anordnungen dieser oder ähnlicher Art sind jedoch mittlerweile üblich geworden.

Aus der DE 198 41 727 A1 ist ein Scheinwerfergehäuse bekannt, mit doppeltem Reflektor und Lüftungsschlitzen in den Reflektoren. Hierbei sind die Reflektoren miteinander verbunden, wobei hier das Hauptgewicht der dort beschriebenen Neuerung jedoch auf der Belüftung des Reflektorinnenraumes basiert.

Weiterhin ist zu erkennen, daß es scheinbar eine minimale Bauraumbeanspruchung bei der Anordnung von zwei Reflektoren gibt.

Aus der DE 198 60 669 A1 ist zu einem sog. Hauptreflektor ein Zusatzreflektor bekannt, welcher mit einem Umlenkspiegel, der vor dem ersten Hauptreflektor angeordnet ist, vom Licht der dort angeordneten Leuchte mitbeaufschlagbar ist. Dieser Zusatzreflektor kann einstückig mit dem Hauptreflektor durch eine entsprechende Anformung verbunden sein oder gebildet sein, wobei der Umlenkspiegel hier lediglich eine gewisse Abblendfunktion über den Zusatzreflektor erzeugen soll.

Der Erfindung liegt somit die Aufgabe zugrunde, eine Beleuchtungsanordnung für Kraftfahrzeug der gattungsgemäßen Art dahingehend weiterzubilden, daß eine weitere Minimalisierung des benötigten Bauraumes auch bei einer Mehrzahl von Scheinwerferanordnungen pro Leuchtengehäuse erreicht wird.

Die gestellte Aufgabe ist bei der Beleuchtungsanordnung für Kraftfahrzeuge der gattungsgemäßen Art erfindungsgemäß durch die kennzeichnenden Merkmale des Patentanspruches 1 gelöst.

Weitere vorteilhafte Ausgestaltungen der erfindungsgemäßen Beleuchtungsanordnung sind in den übrigen abhängigen Ansprüchen angegeben.

Der erfindungsgemäße Kern besteht hierbei darin, daß das Träger- oder Gehäuseteil der ersten Leuchte derart konturiert ist, daß es auf einem Flächensegment integral den Reflektorgrundkörper der zweiten Leuchte bildet. Hierbei wird somit nicht eine Anordnung gewählt, bei der zwei Reflektoren einstückig miteinander verbunden sind, sondern das Träger- oder Gehäuseteil der ersten Leuchte, welches im Bereich der ersten Leuchte keine Reflektorfunktion hat, aber den Reflektor mitträgt, derart konturiert ist, daß es auf mindestens einem Flächensegment integral den Reflektorgrundkörper mindestens einer weiteren Leuchte bildet.

Dies bedeutet, daß der Träger- oder Gehäuseteil in dem eine erste Leuchte angeordnet ist und auch im übrigen ein erster Reflektor befestigt wird, seitlich oder äußerlich eine Konturierung aufweist, daß diese Konturierung mindestens einen weiteren Reflektorgrundkörper mindestens einer weiteren Leuchte bildet.

Dies gewährleistet eine hohe Integrationsdichte, so daß der Bauraum einer solchen Beleuchtungsanordnung, oder eines dieses tragenden Gehäuses minimiert werden kann. Dies kann im Umkehrschluß auch bedeuten, daß eine höhere Integrationsdichte von Beleuchtungsfunktionen in ein gegebenes Einbaumaß erreichbar ist.

In weiterer vorteilhafter Ausgestaltung ist angegeben, daß die sich im Resultat ergebenden, mindestens beiden Reflektoren oder Reflektorflächen in etwa auf gleicher Höhe nebeneinander liegen. Auf diese Weise erscheint im eigentlichen Signal- oder Lichtbild keine Abschattung des einen Lichtkegels durch den Gehäusevorsprung einer zweiten Leuchte.

In weiterer vorteilhafter Ausgestaltung ist angegeben, daß jedoch auch eine Anordnung vorgesehen sein kann, daß die im Resultat sich ergebenden mindestens beiden Reflektoren oder Reflektorflächen auf unterschiedlichen Höhen und somit seitlich hintereinander liegend angeordnet sein können. Dies ist immer dann vorteilhaft, wenn die beiden Leuchten noch enger zueinander geführt werden sollen, wobei den beiden Leuchten jeweils Lichtfunktionen zugeordnet werden, daß es nicht darauf ankommt, daß beide Scheinwerfer oder beide Leuchten einen konkurrierenden Lichtkegel erzeugen, sondern die Funktionen derart unterschiedlich sind, daß es zu keiner Abschattung der Lichtkegel im jeweiligen Beleuchtungsfall kommt.

In weiterer vorteilhafter Ausgestaltung ist angegeben, daß das Gehäuse Teil eines zusammenhängenden, einstückigen Teiles ist. Das könnte bedeuten, daß im weiteren das gesamte Gehäuse noch so konturiert ist, daß es nicht nur den Reflektor mindestens einer weiteren Leuchte segmentweise bildet, sondern auch noch das Gehäuse derselben.

In vorteilhafter Ausgestaltung hierzu ist das Gehäuse materialmäßig aus Druckguß hergestellt. Mit Hilfe von Druckgußgehäusen können zum einen mechanisch stabile und zum anderen temperaturfeste Gehäuse für Scheinwerferanordnungen gewählt werden. Dies ist insbesondere deshalb vorteilhaft, weil hierdurch letztendlich auch thermischen Problemen bei hoher Integrationsdichte von Leuchtmitteln in einem zusammenhängenden Beleuchtungskörper begegnet werden kann. Hierbei müssen Gehäusematerialien gewählt werden, die temperaturstabil sind und im Rahmen aller auftretenden Temperaturgradienten oder auch Dauertemperaturbelastungen formstabil und sicher sind.

In weiterer vorteilhafter Ausgestaltung ist angegeben, daß das gesamte Gehäuseteil so geformt ist, daß es den Leuchtenkörper insgesamt bildet und lediglich nur noch mit einem Glas oder einem durchsichtigem Material abgedeckt werden muß.

In weiterer vorteilhafter Ausgestaltung ist angegeben, daß die gesamte Anordnung höhen- und/oder neigungsverstellbar ist. Hierdurch können Niveaunachregelungen durch unterschiedliche Beladungszustände im Kraftfahrzeug oder ggf. Straßen- und/oder Steigungssituationen ausgleichend die Stellung der Scheinwerfer beeinflussen.

In letzter vorteilhafter Ausgestaltung ist angegeben, daß der Reflektor der zweiten Leuchte durch eine partielle Beschichtung des besagten Gehäuseteiles, in dem der Reflektor angeformt ist, gebildet wird. Durch eine partielle Beschichtung des beispielsweise aus Druckguß bestehenden Gehäuses entfällt somit die Notwendigkeit der Vorsehung eines separaten Reflektorkörpers. Dies spart im übrigen auch Teile ein.

Die partielle Beschichtung kann dabei durch einfaches Bedampfen mit einem reflexionsfähigen Material geschehen. Eine entsprechende Beschichtung in partieller Weise kann im Bereich der Fertigung durch die Verwendung von Bedampfungsmasken bewerkstelligt werden.

Insgesamt ergibt sich somit eine der Aufgabenstellung gemäße kompakte Bauform bei hoher Integrationsdichte von maximal notwendigen Beleuchtungsfunktionen.

Zum anderen kann die Integrationsdichte bei gegebenem, üblichen Bauraum für Scheinwerfergehäuse erhöht werden, so daß keine weiteren übrigen Leuchten, wie separate Blinker, am Fahrzeug zusätzlich angeordnet werden müssen. Dies führt zum anderen zu einer kompakten und sicheren Verlegbarkeit der Anschlußkabel zu den nur noch notwendigen kompakten Beleuchtungskörpern.

Die Erfindung ist in der Zeichnung dargestellt und nachfolgend näher beschrieben.

Es zeigt:
- Figur 1:: Schnittdarstellung durch Gehäuse mit angeformtem Reflektor.
- Figur 2:: Doppelreflektor durch Gehäuse gebildet.
- Figur 3:: Frontalansicht eines erfindungsgemäß integrierten Doppelscheinwerfers.

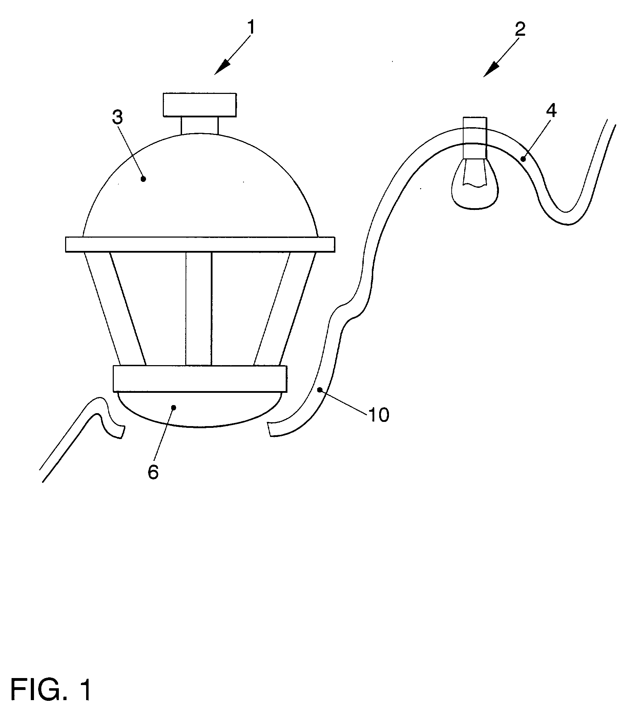

Figur 1 zeigt die besagte Erfindung in einem Ausführungsbeispiel in Schnittdarstellung. Hierbei ist eine erste und eine zweite Leuchte 1 und 2 zu erkennen. Die erste Lampe 1 enthält einen Reflektor 3, der mit einer Halteeinrichtung versehen ist, um einen entsprechend geeigneten positionierten Abstand zu einer Projektionslinse 6 zu bilden. Innerhalb des Reflektors ist das eigentliche Leuchtmittel angeordnet, was hier nicht weiter dargestellt wird. Dieser besagte erste Scheinwerfer 1 ist ein Scheinwerfer nach dem Projektionstyp.

Zu erkennen ist in einem Teilausschnitt, das den ersten Scheinwerfer 1 umgebende Gehäuse 10, welches lediglich eine Öffnung hat, in der die Projektionslinse 6 des ersten Scheinwerfers 1 angeordnet ist. Das den ersten Scheinwerfer 1 umgebende Gehäuse 10 hat dabei eine seitliche Aus- oder Einformung, die an entsprechender Stelle segmentweise oder über einen Flächenabschnitt des Gehäuses durch entsprechende Anformung den Reflektor 4 einer zweiten Leuchte oder eines zweiten Scheinwerfers 2 bildet. Hierbei ist also kein weiterer, separater Reflektor angeordnet, der mit dem ersten Reflektor verbunden wäre, um das gemeinsam wiederum ein separates Gehäuse angeordnet wäre, sondern das Gehäuse des ersten Scheinwerfers 1 bildet durch die entsprechend hier dargestellte Konturierung über eine Teilfläche des Gehäuses 10 den Reflektor 4 eines zweiten Scheinwerfers 2.

Diese zweite Leuchte 2 kann dabei wiederum weitere Elemente enthalten oder beispielsweise lediglich für die Nahlicht- oder Standlichtfunktion vorgesehen sein.

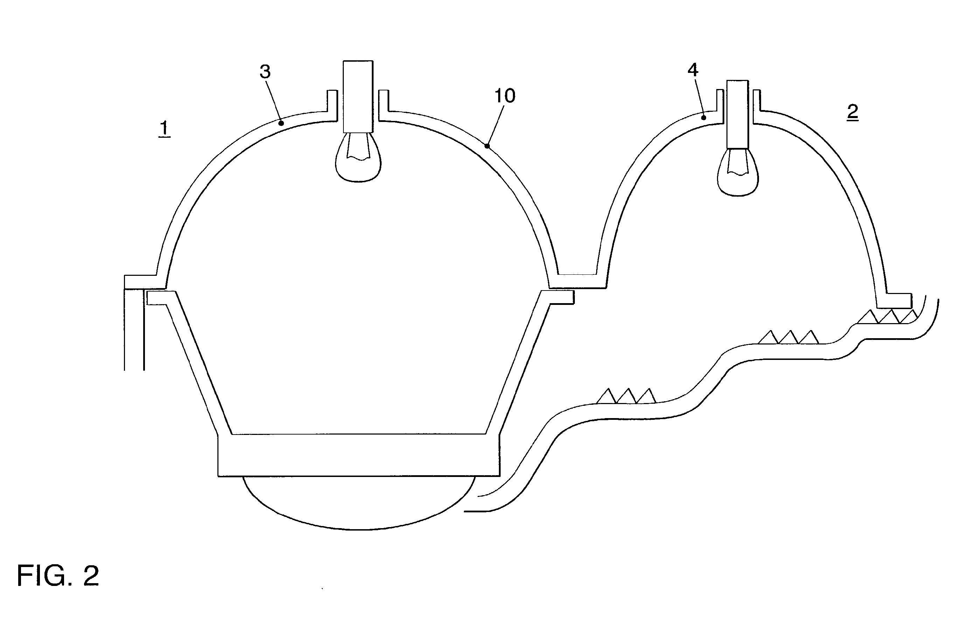

Figur 2 zeigt eine Darstellung, bei der das zusammenhängende Gehäuse 10 durch seine entsprechende Anformung sowohl den Reflektorkörper 3 des ersten Scheinwerfers 1, als auch den Reflektorkörper 4 des zweiten Scheinwerfers 2 bildet. Wichtig ist hierbei, daß es sich im Unterschied zum Stand der Technik nicht um zwei nebeneinander angeordnete, lediglich miteinander verbundene Reflektorkörper handelt, sondern daß die Reflektorkörper selbst durch das Gehäuse 10 gebildet sind, welches die gesamte Anordnung umgibt.

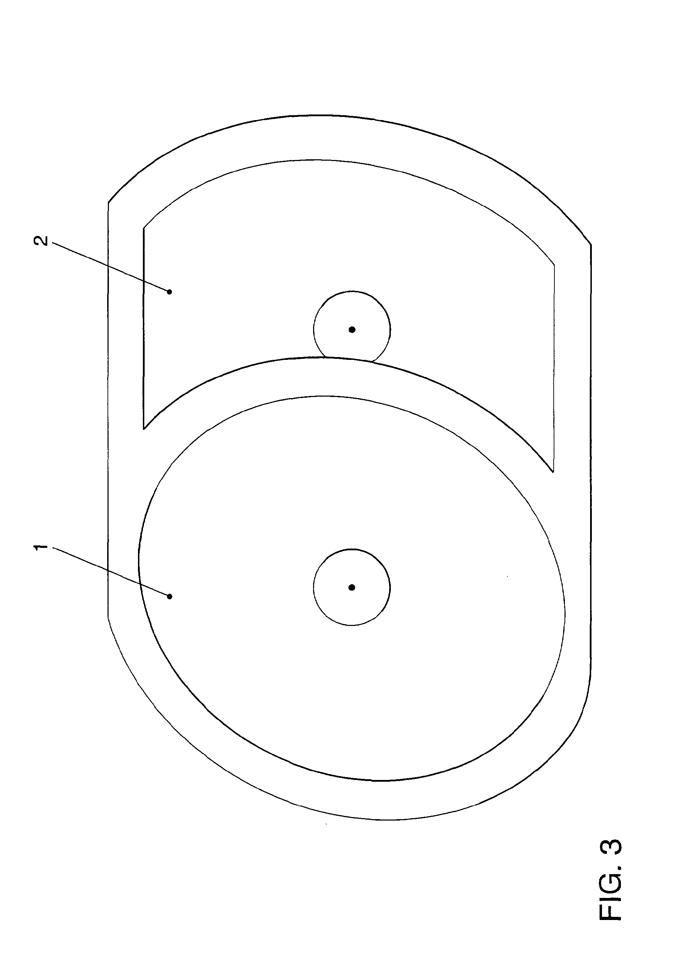

Figur 3 zeigt eine Anordnung wie in Figur 1 oder 2 schnittweise dargestellt, nunmehr hier in Frontalansicht. Ein erster Scheinwerfer 1 und ein zweiter Scheinwerfer 2 sind dicht nebeneinander liegend angeordnet und scheinen hierbei in einem extrem dichten Fall der hohen Integration oder Bauraumminimierung nebeneinander geschoben zu wirken. Dabei nimmt der erste Scheinwerfer eine Position ein, bei der es so wirkt, als daß der zweite Scheinwerfer 2 sich scheinbar teilweise hinter dem ersten Scheinwerfer 1 versteckt. Bei entsprechend zugewiesenen Beleuchtungsfunktionen ist dies ohne Nachteil. Bei einer Anordnung gemäß Figur 1 oder gemäß Figur 2 jedoch, behält man zwei im wesentlichen sich nicht gegenseitig überdeckende Lichtkegel zweier optisch doch noch separierbarer Lichtkegel. Man erhält somit insgesamt eine hohe Integrationsdichte bei einem gegebenem Bauraum oder bei gegebener Beleuchtungsfunktion eine Minimierung des Bauraumes, was in entsprechender Weise ebenso vorteilhaft ist.

## Patentansprüche

1. Beleuchtungsanordnung für Kraftfahrzeuge, mit mindestens zwei Leuchten sowie Reflektoren sowie einem Gehäuse oder Trägerteil in oder auf welchem die Leuchten angeordnet sind, **dadurch gekennzeichnet, daß** das Träger- oder Gehäuseteil (10) der ersten Leuchte (1) derart konturiert ist, daß es auf mindestens einem Flächensegment integral den Reflektorgrundkörper (4) einer mindestens weiteren Leuchte (2) oder den Reflektor (3) und (4) aller Leuchten bildet.

2. Beleuchtungsanordnung nach Anspruch 1, **dadurch gekennzeichnet, daß** die sich im Resultat ergebenden mindestens beiden Reflektoren (3, 4) oder Reflektorflächen in etwa auf gleicher Höhe nebeneinander liegen.

3. Beleuchtungsanordnung nach Anspruch 1, **dadurch gekennzeichnet, daß** die sich im Resultat ergebenden mindestens beiden Reflektoren oder Reflektorflächen auf unterschiedlichen Höhen und somit seitlich hintereinander liegend angeordnet sind.

4. Beleuchtungsanordnung nach einem der vorhergehenden Ansprüche, **dadurch gekennzeichnet, daß** das Gehäuseteil (10) ein zusammenhängendes, einstückiges Teil ist.

5. Beleuchtungsanordnung nach Anspruch 4, **dadurch gekennzeichnet, daß** das Gehäuse oder Gehäuseteil (10) vorzugsweise als metallisches Druckgußteil ausgeführt ist.

6. Beleuchtungseinrichtung nach einem der vorhergehenden Ansprüche, **dadurch gekennzeichnet, daß** das gesamte besagte Teil (10) als Gehäuse derart ausgebildet ist, daß es sowohl Trägergrundkörper, als auch abschließendes montierbares Gehäuse der gesamten Beleuchtungseinrichtung bildet und lediglich nur noch mit Glas abgedeckt ist.

7. Beleuchtungsanordnung nach einem der vorhergehenden Ansprüche, **dadurch gekennzeichnet, daß** die gesamte Beleuchtungsanordnung höhen- und/oder neigungsverstellbar ist.

8. Beleuchtungsanordnung nach einem der vorhergehenden Ansprüche, **dadurch gekennzeichnet, daß** der Reflektor (4) der zweiten Leuchte durch partielle Beschichtung des besagten Gehäuses (10) oder Trägers im Bereich der Reflektoranformung gebildet ist.
